# EUROPÄISCHE PATENTSCHRIFT

(11) **EP 1 064 337 B1**
(45) Veröffentlichungstag und Bekanntmachung des Hinweises auf die Patenterteilung: **20.11.2002**
(21) Anmeldenummer: 99917818.9
(22) Anmeldetag: 05.03.1999
(51) Int. Cl.: C09D 167/00, C09D 163/00, C09D 7/12

(54) **ÜBERZUGSMITTEL UND DEREN VERWENDUNG ZUR HERSTELLUNG VON MEHRSCHICHTLACKIERUNGEN**
COATING AGENTS AND USE FOR PRODUCING COATINGS CONSISTING OF SEVERAL COATS OF LACQUER
AGENTS DE RECOUVREMENT ET LEUR UTILISATION POUR REALISER DES REVETEMENTS CONSTITUES DE PLUSIEURS COUCHES DE LAQUE

(30) Priorität: 10.03.1998 DE 19810219
(43) Veröffentlichungstag der Anmeldung: 03.01.2001
(73) Patentinhaber: E.I. DU PONT DE NEMOURS AND COMPANY, Wilmington Delaware 19898 (US)
(72) Erfinder: DAHM, Ralf, D-42929 Wermelskirchen (DE); FLOSBACH, Carmen, D-42287 Wuppertal (DE); KERBER, Hermann, D-42369 Wuppertal (DE); MANASSIS, Apostolos, D-42289 Wuppertal (DE); RÖSSIG, Peter, D-42285 Wuppertal (DE); SCHUBERT, Walter, D-42349 Wuppertal (DE); TÜCKMANTEL, Astrid, D-42277 Wuppertal (DE)
(74) Vertreter: Gille Hrabal Struck Neidlein Prop Roos
(86) Internationale Anmeldenummer: EP9901553
(87) Internationale Veröffentlichungsnummer: WO99046346

(56) Entgegenhaltungen:
- EP-A- 0 442 336
- WO-A-95/27012
- DE-A- 4 236 901
- DE-A- 4 237 658
- DE-A- 4 310 413
- DE-B- 3 022 996
- DATABASE WPI Section EI, Week 9331 Derwent Publications Ltd., London, GB; Class V06, AN 93-247387 XP002109989 & JP 05 168204 A (TOSHIBA KK), 2. Juli 1993 (1993-07-02)
- DATABASE WPI Section Ch, Week 9326 Derwent Publications Ltd., London, GB; Class A82, AN 93-208944 XP002109990 & JP 05 132636 A (DAINIPPON INK & CHEM KK) , 28. Mai 1993 (1993-05-28)

## Beschreibung

Die Erfindung betrifft Überzugsmittel und deren Verwendung bei der Herstellung von Mehrschichtlackierungen, beispielsweise auf dem Kraftfahrzeugsektor, insbesondere bei der Herstellung von Zweischichtlackierungen vom Basislack/Klarlack-Typ.

Unter Esterbildung aushärtende Überzugsmittel auf Basis einer Kombination von epoxidfunktioneller Komponente und carboxylfunktioneller Komponente sind bekannt. Sie zeichnen sich aus durch gute Chemikalien- und Säurefestigkeit der aus ihnen erstellten und eingebrannten Überzüge und sind daher besonders geeignet als Klaroder Decklacke bei der Automobilserisnlackierung.

Beispielsweise aus der DE-A-30 22 996 ist ein Einbrennlack bekannt, bei dem carboxylgruppenhaltige Polymere, wie z.B. (Meth)acrylcopolymere auf Basis Acrylsäure oder Methacrylsäure und glycidylgruppenhaltige Acrylatharze zu einer härtbaren Zusammensetzung vermischt sind.

Auch die DE-A-42 37 658 beschreibt Einbrennlacksysteme auf Basis von Carboxylgruppen enthaltenden Komponenten und Epoxidgruppen enthaltenden Komponenten. Hier sind die Carboxylgruppen mit Lacton zur Reaktivitätserhöhung kettenveriängert.

Der optisch-ästhetische Eindruck von Basislack/Klarlack-Zweischichtlackierungen wird wesentlich durch die Qualität der Klarlackschicht beeinflußt. Im Idealfall ist die Struktur der Klarlackschicht an waagerechten und senkrechten Flächen eines dreidimensionalen Substrats, beispielsweise einer Automobilkarosse gleich. Der beschriebene Idealfall läßt sich in der Praxis jedoch nicht ohne weiteres erreichen. Beispielsweise kann es zur Ausbildung von Unterschieden in der Oberflächenstruktur oder im Verlauf der äußeren Klarlackschicht kommen, da die Klarlacke nach ihrer Applikation und insbesondere während der Aufheizphase beim Einbrennprozeß als Folge einer temperaturbedingten Viskositätserniedrigung zum Ablaufen oder Absacken an außerhalb der Waagerechten befindlichen Flächen neigen. Diese Gefahr ist um so höher, je höher die Klarlackschichtdicke ist.

Aus DE-C-27 51 761 und EP-A-0 198 519 ist es bekannt, bestimmte Harnstoffverbindungen als Additive in aminoplastharzhärtenden Einbrennlacken auf Basis hydroxyfunktioneller Bindemittel einzusetzen, um unerwünschten Ablauferscheinungen des Lacks beim Einbrennen entgegenzuwirken. Aus EP-A-0 192 304 ist es zusätzlich bekannt, Harnstoffverbindungen als Antiablaufmittel in Lacken einzusetzen, die hydroxyfunktionelle Bindemittel und Aminoplastharze oder freie oder blockierte Polyisocyanate als Vernetzer enthalten. Die Chemikalienfestigkeit, insbesondere die Säurefestigkeit der aus diesen Überzugsmitteln hergestellten eingebrannten Überzugsschichten ist verbesserungsbedürftig.

Aufgabe der Erfindung ist die Bereitstellung von Überzugsmitteln, die eine verminderte Ablaufneigung auch bei der Applikation in höheren Schichtstärken aufweisen und die im eingebrannten Zustand zu Überzügen mit guter Säure- und Chemikalienfestigkeit rühren. Die Überzugsmittel sollen insbesondere als Einbrennüberzugsmittel zur Erstellung der äußeren Klar- oder Decklackschicht einer Mehrschichtlackierung geeignet sein.

Die Aufgabe wird gelöst durch härtbare Überzugsmittel, enthaltend Bindemittel und Vernetzer, ein oder mehrere organische Lösemittel, Antiablaufmittel, sowie gegebenenfalls Pigmente und/oder Füllstoffe und gegebenenfalls weitere lackübliche Additive, die dadurch gekennzeichnet sind, daß als Bindemittel 20 bis 80 Gew.-% einer oder mehrerer carboxylfunktioneller Komponenten A) ausgewählt aus carboxylfunktionellen (Meth)acrylcopolymeren und/oder carboxyfunktionellen Polyestern, deren Carboxyfunktionalität jeweils einer Säurezahl von 15 bis 300 mg KOH/g entspricht und 20 bis 80 Gew.-% eines oder mehrerer epoxidfunktioneller Vernetzer B) enthalten sind, wobei sich die Gew.-% zu 100 Gew.-% addieren, wobei die Komponenten A) und B) zumindest teilweise präkondensiert sein können sowie 5 bis 30 Gew.-% eines oder mehrerer Polymerpolyole C), ausgewählt aus hydroxylfunktionellen Polyestern, Polyurethanen und/oder (Meth)acrylcopolymeren, die von gegebenenfalls Hydroxylgruppen enthaltenden Komponenten A) und B) verschieden sind, bezogen auf die Summe der Gew.-% der Komponenten A) und B), und 0,1 bis 3 Gew.-%, bezogen auf den Harzfestkörper, einer oder mehrerer zuvor in Gegenwart zumindest eines Teils des oder der Polymerpolyole C) hergestellter oder dispergierter, im Überzugsmittel unlöslicher, fester Harnstoffverbindungen D) als Antiablaufmittel enthalten sind, wobei sich sämtliche Gew.-%-Angaben jeweils auf den Feststoffgehalt beziehen.

Das Bindemittel/Vernetzersystem der erfindungsgemäßen Überzugsmittel enthält die Komponenten A), B) und C) als wesentliche Komponenten sowie gegebenenfalls die nachstehend erläuterten optionalen Komponenten E) und/oder F). Beispielsweise können die erfindungsgemäßen Überzugsmittel nur die Komponenten A), B) und C) als Bindemittel/Vernetzersystem enthalten, oder das Bindemittel/Vernetzersystem der erfindungsgemäßen Überzugsmittel enthält zusätzlich die optionalen Komponenten E) und/oder F).

Der Harzfestkörper der erfindungsgemäßen Überzugsmittel wird gebildet aus der Summe der Harzfestkörper bzw. der nichtflüchtigen Anteile der Komponenten A), B), C) und der nachstehend erläuterten optionalen Komponenten E) und F).

Die Härtung der erfindungsgemäßen Überzugsmittel beruht auf der während des Einbrennens stattfindenden chemischen Reaktion der zueinander komplementär reaktiven Gruppen der Komponenten A) und B); es handelt sich dabei um eine Addition der Carboxyl- an die Epoxidgruppen unter Ausbildung von Carbonsäureesterbindungen.

Überraschenderweise stellt die vorliegende Erfindung härtbare Überzugsmittel bereit, mit denen die gestellte Aufgabe gelöst werden kann, obwohl es sich bei den Hydroxylgruppen der Komponente C) der erfindungsgemäßen Überzugsmittel nicht nur um von den zueinander komplementär reaktiven, funktionellen Gruppen der Komponenten A) und B) verschiedene, sondern auch zu diesen nicht komplementär reaktive Gruppen handelt.

Die erfindungsgemäßen Überzugsmittel enthalten als Komponente A) eine oder mehrere carboxyfunktionelle Komponenten A). Bei der carboxyfunktionellen Komponente A) der erfindungsgemäßen Überzugsmittel handelt es sich um carboxyfunktionelle (Meth)acrylcopolymere und/oder carboxyfunktionelle Polyester, deren Carboxyfunktionalität jeweils einer Säurezahl von 15 bis 300 mg KOH/g entspricht. Die carboxyfunktionellen (Meth)acrylcopolymeren und/oder carboxyfunktionellen Polyester können urethanisiert und/oder durch Umsetzung mit Lactonen modifiziert sein.

Die gegebenenfalls urethangruppenhaltigen carboxyfunktionalisierten (Meth)acrylcopolymeren der Komponente A) weisen bevorzugt ein Zahlenmittel des Molgewichts (Mn) von 1000 bis 30000 g/mol auf. Die gegebenenfalls urethangruppenhaltigen carboxyfunktionalisierten Polyester der Komponente A) weisen bevorzugt ein errechnetes Molgewicht von 500 bis 4000 g/mol auf. Die Säurezahl liegt jeweils bei 15 bis 300 mg KOH/g, bevorzugt bei 30 bis 250 mg KOH/g.

Bei der Herstellung der carboxylgruppenhaltigen (Meth)acrylcopolymeren oder Polyester der Komponente A), die gegebenenfalls jeweils Urethangruppen enthalten können, können die Carboxylgruppen direkt durch Verwendung carboxylgruppenhaltiger Bausteine eingeführt werden. Beispiele für zum Aufbau von carboxylgruppenhaltigen (Meth)acrylcopolymeren verwendbare geeignete carboxylgruppenhaltige Monomere sind ungesättigte Carbonsäuren, wie z.B. Acryl-, Methacryl-, Itacon-, Croton, Isocroton-, Aconit-, Malein- und Fumarsäure, Halbester der Malein- und Fumarsäure sowie Carboxyalkylester der (Meth)acrylsäure, z.B. beta-Carboxyethylacrylat und Addukte von Hydroxyalkyl(meth)acrylaten mit Carbonsäureanhydriden, wie z.B. der Phthalsäure-mono-2-(meth)acryloyloxyethylester.

In der vorliegenden Beschreibung und den Patentansprüchen wird der Ausdruck (Meth)acryl verwendet. Dieser bedeutet Acryl und/oder Methacryl.

Bei der Herstellung von carboxylgruppenhaltigen und gegebenenfalls urethangruppenhaltigen (Meth)acrylcopolymeren oder Polyestern der Komponente A) ist es aber auch möglich, zunächst ein Hydroxylgruppen und gegebenenfalls auch schon Carboxylgruppen enthaltendes Polymer aufzubauen und die Carboxylgruppen ganz oder teilweise in einer zweiten Stufe durch Umsetzung mit Carbonsäureanhydriden einzurühren. Bei dieser Arbeitsweise kann mit solchen Mengenverhältnissen gearbeitet werden, daß gegebenenfalls genügend Hydroxylgruppen übrig bleiben, um eine Urethanisierung durchführen zu können.

Für die Addition an die hydroxylgruppenhaltigen Polymeren, die bereits Carboxylgruppen enthalten können, geeignete Carbonsäureanhydride sind die Anhydride von Di- und Polycarbonsäuren, wie beispielsweise bevorzugt Phthalsäure-, Tetrahydro-, Methylhexahydro- und Hexahydrophthalsäureanhydrid.

Zur Einführung von Hydroxylgruppen in die gegebenenfalls urethangruppenhaltigen (Meth)acrylcopolymeren der Komponente A) geeignete Monomere sind beispielsweise Hydroxylalkyl(meth)acrylate wie z.B. Hydroxyethyl(meth)acrylat, sowie die bezüglich der Stellung der Hydroxylgruppe isomeren Hydroxypropyl(meth)acrylate und Hydroxybutyl(meth)acrylate.

Als hydroxyfunktionalisierte Komponente kann zumindest teilweise auch ein Umsetzungsprodukt aus (Meth)acrylsäure mit dem Glycidylester einer Carbonsäure mit einem tertiären alpha-Kohlenstoffatom eingesetzt werden. Glycidylester stark verzweigter Monocarbonsäuren sind beispielsweise unter dem Handelsnamen "Cardura" erhältlich. Die Umsetzung der Acrylsäure oder Methacrylsäure mit dem Glycidylester einer Carbonsäure mit einem tertiären alpha-Kohlenstoff kann vor, während oder nach der Polymerisationsreaktion erfolgen.

Bei der Herstellung der (Meth)acrylcopolymeren der Komponente A) können neben den vorstehend genannten Monomeren auch weitere olefinisch ungesättigte Monomere verwendet werden, insbesondere solche, die neben einer olefinischen Doppelbindung keine weiteren funktionellen Gruppen enthalten. Die Auswahl der weiteren olefinisch ungesättigten Monomeren ist nicht kritisch, es können die zur Polymerisation üblichen olefinischen Monomeren mit oder ohne weitere funktionelle Gruppen eingesetzt werden. Die Monomeren werden in dem Fachmann geläufiger Weise bevorzugt so ausgewählt, daß ihr Einbau nicht zu unerwünschten Eigenschaften des Copolymerisats führt.

Als weitere olefinisch ungesättigte Monomere geeignet sind beispielsweise insbesondere Alkylester der (Meth)acrylsäure, die im Alkylteil beispielsweise 1 bis 20 C-Atome oder mehr enthalten, wie z.B. Methyl(meth)acrylat, Ethyl(meth)acrylat, Propyl(meth)acrylat, Butyl(meth)acrylat, Isopropyl(meth)acrylat, Isobutyl(meth)acrylat, tertiär-Butyl(meth)acrylat, Hexyl(meth)acrylat, Cyclohexyl(meth)acrylat, 2-Ethylhexyl(meth)acrylat, Decyl(meth)acrylat, Hexadecyl(meth)acrylat.

Anstelle der vorstehend genannten (Meth)acrylsäurealkylester oder zusammen mit diesen können zur Herstellung von (Meth)acrylcopolymerisaten der Komponente A) weitere olefinisch ungesättigte Monomere eingesetzt werden, wobei sich die Auswahl dieser Monomeren weitgehend nach den gewünschten Eigenschaften der Überzugsmittel in Bezug auf Härte, Elastizität, Verträglichkeit und Polarität richtet.

Beispiele für weitere, geeignete olefinisch ungesättigte Monomere sind die Alkylester der Malein-, Fumar-, Tetrahydrophthal-, Croton-, Isocroton-, Vinylessig- und Itaconsäure, die im Alkylteil beispielsweise 1 bis 20 C-Atome oder mehr enthalten, wie z.B. die entsprechenden Methyl-, Ethyl, Propyl, Butyl, Isopropyl-, Isobutyl-, Pentyl-, Amyl-, Isoamyl-, Hexyl-, Cyclohexyl-, 2-Ethylhexyl-, Octyl-, Decyl-, Dodecylester.

Weiterhin können auch kleine Anteile von Monomeren mit mindestens zwei polymerisierbaren, olefinisch ungesättigten Doppelbindungen eingesetzt werden. Bevorzugt liegt der Anteil dieser Monomeren unter 5 Gew.-%, bezogen auf das Gesamtgewicht der Monomeren.

Beispiele für derartige Verbindungen sind Hexandioldi(meth)acrylat, Ethylenglykoldi(meth)acrylat, Butandioldi(meth)acrylat, Hexamethylenbis(meth)acrylamid, Trimethylolpropantri(meth)acrylat, Divinylbenzol und ähnliche Verbindungen.

Eine weitere geeignete Komponente sind monovinylaromatische Verbindungen. Vorzugsweise enthalten sie 8 bis 9 Kohlenstoffatome je Molekül. Beispiele für geeignete Verbindungen sind Styrol, Vinyltoluol, alpha-Methylstyrol sowie die isomeren Methylstyrole. Bevorzugt werden Vinyltoluole sowie insbesondere Styrol eingesetzt. Ebenfalls möglich ist die Verwendung von silanmodifizierten Monomeren, wie z.B. gamma-Methacryloxypropyltrimethoxysilan.

Die Herstellung der (Meth)acrylcopolymeren der carboxyfunktionellen Komponente A) erfolgt durch radikalische Copolymerisation. Dabei kann es sich als vorteilhaft erweisen, einen Teil der Monomeren zeitversetzt zueinander zuzudosieren.

Zur Herstellung der (Meth)acrylcopolymeren der Komponente A) können die Monomeren oder das eingesetzte Monomerengemisch Radikalinitiatoren enthalten. Sofern Radikalinitiatoren nicht in der Monomerenmischung enthalten sind, können sie zur Monomerenmischung gegebenenfalls geringfügig zeitversetzt zugesetzt oder separat zudosiert werden. Anschließend kann noch über einen längeren Zeitraum, z.B. während mehrerer Stunden nachpolymerisiert werden. Es ist dann möglich, mit einem üblichen Lacklösemittel auf einen gewünschten Feststoffgehalt, beispielsweise in der Größenordnung von 30 bis 80 Gew.-%, beispielsweise 50 bis 60 Gew.-% einzustellen.

Die Herstellung erfolgt beispielsweise als radikalische Lösungspolymerisation in Anwesenheit eines Radikalinitiators, wie sie dem Fachmann geläufig ist. Beispiele für Radikalinitiatoren sind Dialkylperoxide, Diacylperoxide, Hydroperoxide, Perester, Peroxiddicarbonate, Perketale, Ketonperoxide; Azoverbindungen, wie 2,2'-Azo-bis-(2,4-dimethyl-valeronitril), Azo-bis-isobutyronitril, C-C-spaltende Initiatoren wie z.B. Benzpinakol-Derivate.

Die Polymerisationsinitiatoren werden im allgemeinen beispielsweise in einer Menge von 0,1 bis 4 Gew.-%, bezogen auf die Monomeren-Einwaage, zugesetzt.

Zur möglichen Urethanisierung der carboxyfunktionalisierten (Meth)acrylcopolymeren der Komponente A) können in einem weiteren Reaktionsschritt Hydroxylgruppen der carboxylfunktionalisierten (Meth)acrylcopolymeren der Komponente A) mit Mono-, Di-, Tri- oder Polyisocyanaten umgesetzt werden. Beispiele für zur Urethanisierung einsetzbare Isocyanate sind Phenylisocyanat, sowie die nachstehend bei der Beschreibung der Zusatzvernetzer E) beispielhaft genannten Polyisocyanate und deren durch Umsetzung mit bezogen auf den Isocyanatgehalt unterstöchiometrischen Mengen an Monoalkoholen erhältliche Defunktionalisierungsprodukte. Die Menge der zur Urethanisierung verwendeten Di-, Tri- oder Polyisocyanate wird in dem Fachmann geläufiger Weise so gewählt, daß ein Gelieren vermieden wird. Natürlich ist es ebenfalls möglich, hydroxylfunktionelle (Meth)acrylcopolymere zu urethanisieren, bevor Carboxylgruppen durch Umsetzung mit Säureanhydriden eingeführt werden.

Die carboxylgruppenhaltigen und gegebenenfalls urethangruppenhaltigen Polyester der Komponente A) können nach üblichen Methoden aufgebaut werden aus aliphatischen und/oder cycloaliphatischen Di-, Tri- oder höherwertigen Alkoholen, gegebenenfalls zusammen mit einwertigen Alkoholen und aus aliphatischen, aromatischen und/oder cycloaliphatischen Carbonsäuren, insbesondere Dicarbonsäuren, sowie höherwertigen Polycarbonsäuren. Beispiele für geeignete Alkohole sind aliphatische Diole, wie Ethylenglykol, 1,2-Propandiol, 1,3-Propandiol, 2,2-Diethyl-1.3-propandiol, die isomeren Butandiole, 1,5-Pentandiol, 3-Methyl-1,5-pentandiol, 1,6-Hexandiol, 2-Ethyl-1,6-hexandiol, 2,2,4-Trimethyl-1,6-hexandiol, 1,4-Dimethylolcyclohexan, mehrwertige aliphatische Alkohole, wie Glycerin, Trimethylolethan, Ditrimethylolpropan, Trimethylolpropan, Pentaerythrit, sowie Veretherungsprodukte von Diolen und Polyolen, z.B. Di- und Triethylenglykol, Polyethylenglykol, Neopentylglykolester von Hydroxypivalinsäure.

Beispiele für geeignete Carbonsäuren sind Adipin-, Azelain-, 1,3- und 1,4-Cyclohexandicarbonsäure, Tetrahydrophthal-, Hexahydrophthal-, Endomethyltetrahydrophthalsäure, die isomeren Phthalsäuren bzw. deren Anhydride sowie deren veresterungsfähige Derivate.

Ebenso wie die bereits beschriebenen carboxylfunktionellen (Meth)acrylcopolymeren der Komponente A) können die carboxylfunktionalisierten Polyester der Komponente A) urethanisiert werden. Die Reaktionsbedingungen und die verwendbaren Polyisocyanate sind die gleichen wie bei den (Meth)acrylcopolymeren. Möglich ist die Einführung der Urethangruppen durch Umsetzung der carboxyl- und hydroxylfunktionellen Polyester mit Mono-, Di-, Tri- oder höherfunktionellen Polyisocyanaten.

Ebenfalls möglich ist es, die Urethangruppen bei der Synthese der Polyester selbst einzuführen. Dies geschieht, indem Di- oder Tricarbonsäuren ganz oder teilweise gegen Di- oder Triisocyanate ausgetauscht werden.

Die Carboxylgruppen der carboxyfunktionellen (Meth)acrylcopolymerisate und Polyester der Komponente A) können mit einem Lacton "kettenverlängert" sein. Gleiches gilt für in den (Meth)acrylcopolymerisaten und Polyestern der Komponente A) gegebenenfalls enthaltene Hydroxylgruppen. Die "Kettenverlängerung" ergibt sich durch unter Ringöffnung verlaufende Anlagerung von Lactonen an die Carboxylund/oder Hydroxylgruppen. Dabei entstehen endständige, exponierte Carboxyl- bzw. Hydroxylgruppen. Bevorzugt erfolgt die Anlagerung von Lactonen an carboxyfunktionelle (Meth)acrylcopolymerisate und Polyester der Komponente A), die frei von OH-Gruppen sind. Die Anlagerung des Lactons erfolgt bevorzugt als letzter Syntheseschritt bei der Herstellung der betreffenden Komponente A). Ein Beispiel für ein besonders bevorzugt eingesetztes Lacton ist epsilon-Caprolacton.

Die erfindungsgemäßen härtbaren Überzugsmittel enthalten als Komponente B) einen oder mehrere epoxidfunktionelle Vernetzer. Es handelt sich dabei beispielsweise um Verbindungen mit mindestens zwei Epoxidfunktionen im Molekül und einem Epoxidäquivalentgewicht von beispielsweise 200 bis 700, bevorzugt 250 bis 500 und insbesondere 300 bis 400, jeweils bezogen auf Festharz. Das Zahlenmittel des Molgewichtes (Mn) liegt bevorzugt bei 200 bis 10000 g/mol. Die Glasübergangstemperatur liegt bevorzugt bei -20°C bis 70°C, besonders bevorzugt bei 0°C bis 50°C und insbesondere bei 5°C bis 40°C. Bevorzugt liegt die Obergrenze bei bis zu 50°C.

Beispiele hierfür sind übliche Di- oder Polyepoxide, z.B. Polyglycidylether auf Basis von Diethylenglykol, Dipropylenglykol, Polypropylenglykol, Bisphenol A oder Triglycidylether von Glycerin.

Weitere Beispiele für Di- oder Polyepoxide sind solche auf der Basis von Di- oder Polyglycidylestern. Beispiele hierfür sind Umsetzungsprodukte aus 1-Hydroxy-2,3-epoxypropan mit Phthal- oder Terephthalsäure zu Phthal- oder Terephthalsäurebis(2,3-epoxypropylester) oder einem Diglycidylether von Bisphenol A mit Trimellithsäureanhydrid zu Polyestern, beispielsweise mit einem Zahlenmittel des Molekulargewichtes (Mn) von 500 bis 2000.

Bevorzugte Komponenten B) sind epoxidfunktionelle (Meth)acrylcopolymere, insbesondere Glycidyl(meth)acrylat-Copolymere. Als Comonomere können beispielsweise (Meth)acrylsäureester, wie z.B. Methyl-, Ethyl-, Butyl-, Isobutyl-, Ethylhexyl-, Cyclohexyl- und/oder Lauryl(meth)acrylat gewählt werden, (Meth)acrylsäurehydroxyalkylester wie z.B. Hydroxyethyl- und/oder Hydroxypropyl(meth)acrylat, weiterhin auch Styrol, Vinyltoluol und/oder alpha-Methylstyrol sowie alle alpha,beta-ungesättigten Monomere, wie sie bereits vorstehend bei der Komponente A) beschrieben wurden. Das Zahlenmittel des Molgewichtes (Mn) kann beispielsweise zwischen 1000 und 10000 liegen, bevorzugt bei 2000 bis 5000. Weitere copolymerisierbare glycidylfunktionelle Monomere sind z.B. (Meth)allylglycidylether oder 3,4-Epoxy-1-vinylcyclohexan. Die Herstellung der Copolymeren erfolgt über radikalische Lösungspolymerisation, sie ist dem Fachmann bekannt und bedarf keiner weiteren Erläuterung.

Es ist auch möglich, die Komponenten A) und B) zumindest teilweise in einem weiteren Reaktionsschritt zu präkondensieren. Dies kann z.B. dadurch erfolgen, daß man die Komponenten A) und B) gemeinsam erhitzt. Den gewünschten Kondensationsgrad kann man beispielsweise an der Verringerung der Säurezahl ermitteln. Beispielsweise ist es möglich, unter Rühren, auf Temperaturen von beispielsweise 80 bis 120°C zu erhitzen und so lange weiterzurühren, bis die Säurezahl der Mischung um beispielsweise 2 bis 5 mg KOH/g Festharz gefallen ist. Selbstverständlich ist es auch möglich, die Säurezahl weiter zu reduzieren, dabei sollte jedoch darauf geachtet werden, daß die Viskosität der Mischung nicht bis zum Gelieren ansteigt.

Bei der Bereitung der erfindungsgemäßen Überzugsmittel werden die Mengenverhältnisse bevorzugt so gewählt, daß zwischen der carboxylgruppenhaltigen Komponente A) und der Epoxidkomponente B) ein molares Verhältnis der Carboxylzu Epoxidgruppen von 1 : 3 bis 3 : 1 vorliegt.

Die erfindungsgemäßen Überzugsmittel enthalten, jeweils bezogen auf den Feststoffgehalt, 5 bis 30 Gew.-%, bevorzugt 5 bis 20 Gew.-% eines oder mehrerer Polymerpolyole C), bezogen auf die Summe der Gewichte der Komponenten A) und B). Ein Teil der oder die gesamte Menge der in den erfindungsgemäßen Überzugsmitteln enthaltenen Polymerpolyol(e) C) dient als Reaktionsmedium bei der Herstellung der in der Folge noch erläuterten Harnstoffverbindungen D).

Bei den Polymerpolyolen C) handelt es sich um aus hydroxyfunktionellen Polyestern, Polyurethanen und/oder (Meth)acrylcopolymeren ausgewählte Polymerpolyole, die verschieden sind von gegebenenfalls Hydroxylgruppen enthaltenden Komponenten A) und B). Die Polymerpolyole C) besitzen mindestens zwei Hydroxylfunktionen im Molekül. Neben den Hydroxylgruppen entsprechend einer Hydroxylzahl von beispielsweise 30 bis 350 mg KOH/g können die Polymerpolyole C) auch Carboxylgruppen entsprechend einer Säurezahl von 0 bis 15 mg KOH/g enthalten. Die Polymerpolyole C) enthalten neben den Hydroxylgruppen und den gegebenenfalls vorhandenen Carboxylgruppen bevorzugt keine weiteren funktionellen Gruppen. insbesondere keine Epoxidgruppen.

Die in den erfindungsgemäßen Überzugsmitteln eingesetzten Polymerpolyole weisen beispielsweise ein Zahlenmittel der Molmasse (Mn) von 500 bis 10000 und eine Hydroxylzahl von 30 bis 350 mg KOH/g auf.

Beispiele für in den erfindungsgemäßen Überzugsmitteln als Polymerpolyole C) bevorzugt einsetzbare hydroxyfunktionelle Polyesterharze sind übliche, beispielsweise solche mit einem Zahlenmittel der Molmasse (Mn) von 500 bis 5000, bevorzugt von 1000 bis 3000 und Hydroxylzahlen von 30 bis 350, bevorzugt von 50 bis 280 mg KOH/g.

Beispiele für in den erfindungsgemäßen Überzugsmitteln als Polymerpolyole C) bevorzugt einsetzbare hydroxyfunktionelle Polyurethanharze sind übliche, beispielsweise solche mit einem Zahlenmittel der Molmasse (Mn) von 500 bis 5000, bevorzugt von 1000 bis 3000 und Hydroxylzahlen von 30 bis 350, bevorzugt von 50 bis 280 mg KOH/g.

Beispiele für in den erfindungsgemäßen Überzugsmitteln als Polymerpolyole C) bevorzugt einsetzbare hydroxyfunktionelle (Meth)acrylcopolymere sind übliche, beispielsweise solche mit einem Zahlenmittel der Molmasse (Mn) zwischen 1000 und 10000 und Hydroxylzahlen von 30 bis 300, bevorzugt von 50 bis 250 mg KOH/g. Die (Meth)acryl-Copolymeren können beispielsweise in Gegenwart von oligomeren oder polymeren Polyester- und/oder Polyurethanharzen, beispielsweise solchen wie in den beiden vorstehenden Absätzen erläutert, hergestellt worden sein.

Neben den Komponenten A) und B) und C) können die erfindungsgemäßen Überzugsmittel auch ein oder mehrere zusätzliche von Epoxidvernetzern B) unterschiedliche Vernetzer E) enthalten, die eine Zusatzvernetzung unter Einbezug von Hydroxylgruppen, beispielsweise der im Bindemittelsystem vorhandenen und/oder während des Einbrennens im Zuge der Epoxid/Carboxyl-Additionsreaktion gebildeten Hydroxylgruppen, ermöglichen. Die Zusatzvernetzer sind in Mengenanteilen von insgesamt 0 bis 20 Gew.-%, bezogen auf die Summe der Komponenten A), B) und C) enthalten, jeweils bezogen auf den Feststoffgehalt.

Beispiele für Zusatzvernetzer E) sind Aminoplastharze, insbesondere Melaminharze. Beispiele hierfür sind butanol- oder isobutanolveretherte Melaminharze wie z.B. die Handelsprodukte Setamin ^{R}US 138 oder Maprenal ^{R}MF 610; sowohl butanol- als auch methanolveretherte Melaminharze wie z.B. Cymel ^{R} 254, methanolveretherte Melaminharze wie z.B. Cymel ^{R} 325, Cymel ^{R} 327, Cymel ^{R} 350 und Cymel ^{R} 370, Maprenal ^{R} MF 927 oder Melaminharze vom Hexamethoxymethylmelamin-Typ wie z.B. Cymel ^{R} 301 oder Cymel ^{R} 303.

Weitere Beispiele für Zusatzvernetzer E) sind unter Estergruppenbildung, insbesondere unter Bildung von Urethangruppen (Carbaminsäureestergruppen) vernetzende Komponenten auf Triazinbasis, wie beispielsweise bevorzugt Tris(alkoxycarbonylamino)triazin.

Weitere Beispiele für Zusatzvernetzer E) sind blockierte Polyisocyanate, die aus freien Polyisocyanaten durch Umsetzung mit unter den Einbrennbedingungen wieder abspaltbaren ein aktives Wasserstoffatom enthaltenden Verbindungen hergestellt werden können. Beispiele für einsetzbare Polyisocyanate sind insbesondere cycloaliphatische und aliphatische Polyisocyanate wie Tetramethylendiisocyanat, Hexamethylendiisocyanat, 2,2,4-Trimethylendiisocyanat, Cyclohexan-1,3- und 1,4-diisocyanat, Isophorondiisocyanat, Biscyclohexylmethandiisocyanat.

Neben diesen einfachen Isocyanaten sind auch solche geeignet, die Heteroatome in dem die Isocyanatgruppen verknüpfenden Rest enthalten. Beispiele hierfür sind Carbodiimidgruppen, Allophanatgruppen, Isocyanuratgruppen, Uretdiongruppen, Urethangruppen, acylierte Harnstoffgruppen und/oder Biuretgruppen aufweisende Polyisocyanate.

Besonders gut geeignet sind die bekannten Polyisocyanate, die üblicherweise bei der Herstellung von Lacken eingesetzt werden, z.B. Biuret-, Isocyanurat- oder Urethangruppen aufweisende Modifizierungsprodukte der oben genannten einfachen Polyisocyanate, insbesondere Tris-(6-Isocyanatohexyl)-biuret, das sich von Isophorondiisocyanat oder Hexandiisocyanat ableitende Isocyanurat oder niedermolekulare, Urethangruppen aufweisende Polyisocyanate, wie sie durch Umsetzung von im Überschuß eingesetzten Isophorondiisocyanat mit einfachen mehrwertigen Alkoholen des Molekulargewichtsbereiches 62 bis 300, insbesondere mit Trimethylolpropan erhalten werden können. Selbstverständlich können auch beliebige Gemische der genannten Polyisocyanate eingesetzt werden.

Geeignete Polyisocyanate sind ferner die bekannten, endständige Isocyanatgruppen aufweisende Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanatgruppen reaktionsfähigen Gruppen zugänglich sind. In diesen bekannten Prepolymeren entspricht das Verhältnis von Isocyanatgruppen zu gegenüber Isocyanatgruppen reaktiven Wasserstoffatomen bevorzugt 1,05 bis 10 : 1, besonders bevorzugt 1,1 bis 3 : 1, wobei die Wasserstoffatome vorzugsweise aus Hydroxylgruppen stammen. Die Art und Mengenverhältnisse der bei der Herstellung von Isocyanatgruppen aufweisenden Prepolymeren eingesetzten Ausgangsmaterialien werden im übrigen vorzugsweise so gewählt, daß die Isocyanatgruppen aufweisenden Prepolymeren eine mittlere NCO-Funktionalität von 2 bis 4, vorzugsweise von 2 bis 3 und ein Zahlenmittel der Molmasse (Mn) von 500 bis 10000, vorzugsweise von 800 - 4000 aufweisen.

Es werden übliche Verkappungsmittel eingesetzt, beispielsweise Verbindungen mit einem aktiven Wasserstoffatom, ausgewählt aus CH-aciden Verbindungen wie Acetylaceton oder CH-acide Ester, wie z.B. Acetessigsäurealkylester, Malonsäuredialkylester, aliphatische oder cycloaliphatische Alkohole, wie n-Butanol, Isopropanol, tert.-Butanol, Furfurol, 2-Ethylhexanol, Cyclohexanol; Oxime wie Methylethylketoxim, Acetonoxim, Cyclohexanonoxim, Acetophenonoxim, Lactame wie epsilon-Caprolactam oder Pyrrolidon-2, Imidazole wie 2-Methylimidazol, Pyrazole wie 2,3-Dimethylpyrazol.

Weitere Beispiele für Zusatzvernetzer E), die in den erfindungsgemäßen Überzugsmitteln enthalten sein können, sind organische Verbindungen, die mindestens zwei cyclische Carbonsäureanhydridgruppen pro Molekül aufweisen. Der Gehalt dieser Verbindungen an Carbonsäureanhydridgruppen (formal berechnet als C₄O₃, Molekulargewicht = 96) liegt bevorzugt bei 5 bis 88 Gew.-%, besonders bevorzugt 6 bis 30 Gew.-%. Geeignet sind beispielsweise Trimellithsäureanhydrid-Ester von Ethylenglykol, Propylenglykol, Diethylenglykol, Triethylenglykol, Neopentylglykol, Glycerin oder Trimethylolpropan, bevorzugt hergestellt im Verhältnis 1mol Trimellithsäureanhydrid pro mol Hydroxylgruppen.

Weitere geeignete Polyanhydride sind beispielsweise Benzophenontetracarbonsäuredianhydrid und 1,2,4,5-Benzoltetracarbonsäuredianhydrid.

Besonders bevorzugte Polyanhydride sind Copolymerisate von olefinisch ungesättigten Monomeren, die pro Molekül im statistischen Mittel mindestens zwei cyclische Carbonsäureanhydridgruppen aufweisen. Bevorzugt handelt es sich hierbei um Copolymerisate von Maleinsäureanhydrid und/oder Itaconsäureanhydrid mit üblichen Comonomeren wie sie beispielsweise im Zusammenhang mit der Komponente A) beispielhaft schrieben sind. Besonders gut geeignet sind Copolymerisate, basierend auf Maleinsäureanhydrid, Styrol und/oder Alkylestern der Acryl- und/oder Methacrylsäure. Die Copolymerisate weisen vorzugsweise ein Zahlenmittel des Molgewichts (Mn) von 1500 bis 75000, vorzugsweise 2000 bis 50000 auf.

Weiterhin können die erfindungsgemäßen Überzugsmittel 0 bis 10 Gew.-% einer oder mehrerer Monoepoxidverbindungen F), bezogen auf die Summe der Komponenten A) und B) enthalten, jeweils bezogen auf den Festkörper. Dabei handelt es sich um unter den Einbrennbedingungen im wesentlichen nichtflüchtige Substanzen, beispielsweise beträgt der flüchtige Anteil bevorzugt unter 1 Gew.-%, bezogen auf die Gesamtmenge an Monoepoxid F). Die Molmassen der Monoepoxide F) liegen über 150 und bevorzugt sind derartige Verbindungen mit einem mittleren Molekulargewicht von bis zu 3000, besonders bevorzugt unter 1000. Im Falle der niedrigen Molekulargewichte können diese Verbindungen das Viskositätsverhalten der hiermit erstellten Lacke positiv beeinflussen, da sie bei Addition an Carboxylgruppen der Komponente A) quasi als Reaktivverdünner fungieren.

Beispiele für derartige Verbindungen sind z.B. Umsetzungsprodukte aus einer Diglycidylverbindung, z.B. eines Diglycidylethers, wie einem Mol Bisphenol-Adiglycidylether und einem Mol einer gesättigten oder ungesättigten Monocarbonsäure wie Essigsäure, Propionsäure oder Isononansäure. Weitere Beispiele sind Umsetzungsprodukte von Di- oder Polyepoxiden wie z.B. Polyglycidylether auf der Basis von Diethylenglykol, Dipropylenglykol, Polypropylenglykol mit einem Zahlenmittel des Molgewichts (Mw) von bis zu 2000 und Triglycidylether von Glycerin und/oder Polyphenolen wie Bisphenol A oder F mit den genannten Monocarbonsäuren.

Besonders bevorzugt ist der Glycidylester der Versaticsäure mit dem Handelsproduktnamen Cardura E der Shell AG.

Die erfmdungsgemäßen Überzugsmittel weisen im applikationsfähigen Zustand beispielsweise einen Festkörpergehalt, gebildet aus dem Harzfestkörper, den nachstehend erläuterten Harnstoffverbindungen D) sowie gegebenenfalls enthaltenen weiteren nichtflüchtigen Bestandteilen, von 40 bis 70 Gew.-% auf. Als flüchtige Bestandteile enthalten sie organische Lösemittel, wie sie beispielsweise für die Herstellung von Überzugsmitteln, beispielsweise Lacken üblich sind. Es kann sich auch um Lösemittel handeln, wie sie bei der Herstellung der Einzelkomponenten verwendet werden. Beispiele sind Glykolether, wie Butylglykol, Butyldiglykol, Dipropylenglykoldimethylether, Dipropylenglykolmonomethylether, Ethylenglykoldimethylether; Glykoletherester, wie Ethylglykolacetat, Butylglykolacetat, 3-Methoxy-n-butylacetat, Butyldiglykolacetat, Methoxypropylacetat; Ester, wie Butylacetat, Isobutylacetat, Amylacetat; Ketone, wie Methylethylketon, Methylisobutylketon, Diisobutylketon, Cyclohexanon. Isophoron; Alkohole, wie Methanol, Ethanol, Propanol, Butanol; aromatische Kohlenwasserstoffe, wie Xylol, Solvesso 100 (eingetragenes Warenzeichen für ein Gemisch aromatischer Kohlenwasserstoffe mit einem Siedebereich von 155 bis 185°C) und aliphatische Kohlenwasserstoffe.

Die erfindungsgemäßen Überzugsmittel enthalten 0,1 bis 3, bevorzugt 0,3 bis 2, besonders bevorzugt 0,5 bis 1,5 Gew.-%, bezogen auf den Harzfestkörper der Überzugsmittel, einer oder mehrerer zuvor in Gegenwart zumindest eines Teils des oder der Polymerpolyole C) hergestellter, im Überzugsmittel unlöslicher, fester Harnstoffverbindungen D) als Antiablaufmittel, d.h. als thixotropierend wirkende oder Strukturviskosität bewirkende Mittel, welche das Ablaufverhalten der erfindungsgemäßen Überzugsmittel günstig beeinflussen. Sie verhindern das unerwünschte Ablaufen oder Absacken von aus den erfindungsgemäßen Überzugsmitteln auf senkrechten Flächen aufgebrachten Überzugsschichten wirksam.

Bei den Harnstoffverbindungen D) handelt es sich um als Antiablaufmittel beispielsweise aus den DE-C-27 51 761, EP-A-0 192 304 und EP-A-0 198 519 bekannte Harnstoffverbindungen.

Bei den Harnstoffverbindungen D) handelt es sich um Additionsprodukte aus aromatischen, araliphatischen, cycloaliphatischen oder aliphatischen Diisocyanaten und/oder davon abgeleiteten Polyisocyanaten (beispielsweise solche vom Isocyanurat-Typ) und Mono- und/oder Polyaminen mit primären und/oder sekundären Aminogruppen. Bei den Additionsprodukten kann es sich um definierte niedermolekulare Verbindungen oder oligomere oder polymere Additionsprodukte handeln. Bevorzugte Harnstoffverbindungen D) sind solche, bei denen Polyisocyanat und Amin in einem stöchiometrischen Verhältnis von 0,7 - 1,5 primären und/oder sekundären Aminogruppen pro Isocyanatgruppe umgesetzt worden sind, besonders bevorzugt in einem stöchiometrischen Verhältnis von Aminogruppen zu Isocyanatgruppen von 0,9 bis 1,1 : 1. Besonders bevorzugt werden als Harnstoffverbindungen D) Additionsprodukte aus Diisocyanaten, bevorzugt aus aliphatischen oder cycloaliphatischen Diisocyanaten und primären Aminen. bevorzugt primären Monoaminen eingesetzt. Bevorzugt handelt es sich bei den aliphatischen oder cycloaliphatischen Diisocyanaten um symmetrisch aufgebaute Düsocyanate.

Die in den erfindungsgemäßen Überzugsmitteln eingesetzten Harnstoffverbindungen D) werden so ausgewählt, daß es sich um feste, besonders bevorzugt kristalline Stoffe handelt. Die Teilchengrößen der D)-Teilchen liegen bevorzugt bei 0,1 bis 20 µm. Bevorzugt besitzen die festen oder kristallinen Harnstoffverbindungen D) einen hohen Erstarrungs- oder Schmelzpunkt, der insbesondere oberhalb der beim Einbrennen der erfindungsgemäßen Überzugsmittel herrschenden Einbrenntemperaturen liegt, insbesondere über 80°C, beispielsweise zwischen 80 und 250°C. Besonders bevorzugt wird das aus 1 mol 1,6-Hexandiisocyanat und 2 mol Benzylamin gebildete Addukt als Harnstoffverbindung D) in den erfindungsgemäßen Überzugsmitteln eingesetzt.

Die Harnstoffverbindungen D) können in üblicher Weise hergestellt werden durch Addition von Aminen mit primären und/oder sekundären Aminogruppen an Polyisocyanate. Dabei kann Amin zum Polyisocyanat oder Polyisocyanat zum Amin zugegeben werden, oder die Reaktanden werden simultan zugegeben, bevorzugt ist die Zugabe des Polyisocyanats zum Amin. Die Herstellung erfolgt beispielsweise bei Temperaturen zwischen 20 und 80°C in Gegenwart zumindest eines Teils des oder der im erfindungsgemäßen Überzugsmittel enthaltenen Polymerpolyole C), d.h. in Gegenwart eines Teils der oder der gesamten im erfindungsgemäßen Überzugsmittel vorhandenen hydroxyfunktionellen Polymerpolyolkomponente C). Zweckmäßig ist dabei eine gute Durchmischung des Reaktionssystems, beispielsweise durch kräftiges Rühren, durch Verwendung eines Dissolvers oder durch Durchführung der Additionsreaktion in bzw. unter Verwendung eines Rotor-Stator-Aggregats. Enthält das erfindungsgemäße Überzugsmittel mehr als ein Polymerpolyol C), kann die Herstellung beispielsweise in einem dieser Polymerpolyole C) erfolgen. Bevorzugt wird so gearbeitet, daß die gebildeten Harnstoffverbindungen D) in der Polymerpolyolkomponente C) bzw. der gelösten Polymerpolyolkomponente C) als feinverteilter Feststoff ausfallen oder auskristallisieren, beispielsweise während oder nach Beendigung der Additionsreaktion, beispielsweise beim oder nach dem Abkühlen. Solche Dispersionen von als fein verteilter, bevorzugt kristalliner Feststoff in der Polymerpolyolkomponente C) oder ihrer Lösung vorliegenden Harnstoffverbindungen D) können auch hergestellt werden durch Aufschmelzen und feines Verteilen der Harnstoffverbindungen D) in C) und anschliessendes Abkühlen unter den Erstarrungs- oder Schmelzpunkt der Harnstoffverbindungen D).

Der Gehalt der Harnstoffverbindungen D) in den Dispersionen beträgt beispielsweise 0,5 bis 10, insbesondere zwischen 1 und 10 Gew.-%, bezogen auf den Feststoffgehalt an Polymerpolyol C).

Die Herstellung der erfindungsgemäßen Überzugsmittel erfolgt bevorzugt so, daß die Dispersion der Harnstoffverbindungen D) im flüssigen oder gelösten Polymerpolyol C) mit den übrigen Bestandteilen des Überzugsmittels vermischt wird. Beispielsweise wird zunächst mit den Komponenten A) und B) vermischt, bevor die weiteren Bestandteile hinzugemischt werden.

Weitere Beispiele für in den erfindungsgemäßen Überzugsmitteln verwendbare Harnstoffverbindungen D), Ausgangsstoffe, Verfahren und Verfahrensparameter zur Herstellung der Harnstoffverbindungen D) und ihre Einarbeitung in Überzugsmittel sind in den DE-C-27 51 761, EP-A-0 192 304 und EP-A-0 198 519 beschrieben.

Sollen die erfindungsgemäßen Überzugsmittel als pigmentierte Decklacke beispielsweise bei der Herstellung der äußeren Deckschicht einer Mehrschichtlackierung eingesetzt werden, so enthalten sie Pigmente und gegebenenfalls Füllstoffe. Dabei liegt das Pigment/Harzfestkörper-Gewichtsverhältnis beispielsweise im Bereich zwischen 0,05 bis 2 : 1. Beispiele für Pigmente sind anorganische und/oder organische Buntpigmente und/oder Effektpigmente, wie z.B. Titandioxid, Eisenoxidpigmente, Ruß, Azopigmente, Phthalocyaninpigmente, Chinacridonpigmente, Metallpigmente, z.B. aus Titan, Aluminium oder Kupfer, Interferenzpigmente, wie z.B. titandioxidbeschichtetes Aluminium, beschichteter Glimmer, Graphiteffektpigmente, plättchenförmiges Eisenoxid, plättchenförmige Kupferpthalocyaninpigmente. Beispiele für Füllstoffe sind lackübliche Füllstoffe, wie z.B. Talkum und Silikate.

Weiterhin können die als pigmentierte Decklacke oder bevorzugt als transparente Klarlacke einsetzbaren erfindungsgemäßen Überzugsmittel lackübliche Additive in lacküblichen Mengen, beispielsweise bis zu 5 Gew.-% bezogen auf den gesamten Lack, enthalten, z.B. transparente Pigmente oder Füllstoffe, Verlaufsmittel, Farbstoffe, Lichtschutzmittel, Antioxidantien oder weitere, neben den Harnstoffverbindungen D) verwendbare Rheologiesteuerer, wie Mikrogele, NAD (= non-aqueous-dispersions), spätestens während des Einbrennens Formaldehyd liefernde Verbindungen, Katalysatoren zur Katalyse der Reaktion von Carboxyl- und Epoxidgruppen und/oder zur Katalyse der gegebenenfalls möglichen Zusatzvernetzung.

Die erfindungsgemäßen Überzugsmittel können nach bekannten Verfahren, insbesondere durch Spritzen in Schichtdicken beispielsweise von 25 bis 60 µm appliziert werden. Nach einer Abdunstphase wird das applizierte Überzugsmittel durch Erwärmen vernetzt. Die Einbrenntemperaturen liegen z.B. bei 60 bis 180°C, bevorzugt bei 60 bis 160°C.

Die erfindungsgemäßen Überzugsmittel können beispielsweise zur Herstellung der äußeren pigmentierten Decklackschicht einer Mehrschichtlackierung verwendet werden. Insofern betrifft die vorliegende Erfindung auch die Verwendung der erfindungsgemäßen Überzugsmittel als Decklacküberzugsmittel.

Bevorzugt werden die erfindungsgemäßen Überzugsmittel als transparente Klarlacke formuliert, die zur Herstellung der äußeren Klarlackschicht einer Mehrschichtlackierung verwendet werden können. Insofern betrifft die vorliegende Erfindung auch die Verwendung der erfindungsgemäßen Überzugsmittel als Klarlacküberzugsmittel. Beispielsweise kann das erfindungsgemäße Klarlacküberzugsmittel auf ein mit einer farb- und/oder effektgebenden ein- oder mehrschichtigen Vorbeschichtung versehenes Substrat aufgetragen und eingebrannt werden. Die Einbrenntemperaturen der erfindungsgemäßen Klarlacküberzugsmittel liegen beispielsweise zwischen 60 und 160°C. Für Automobilanwendungen liegen sie beispielsweise zwischen 60 und 140, für Anwendungen in der Automobilserienlackierung insbesondere zwischen 80 und 140 und bevorzugt zwischen 110 und 130°C.

Bevorzugt werden die erfindungsgemäßen Klarlacküberzugsmittel zur Herstellung einer Basislack/Klarlack-Mehrschichtlackierung verwendet. Dabei erfolgt der Auftrag einer farb- und/oder effektgebenden Basislackschicht auf ein gegebenenfalls vorbeschichtetes Substrat, insbesondere auf vorbeschichtete Automobilkarossen oder deren Teile, bevor die Klarlacküberzugsschicht aus einem erfindungsgemäßen Klarlacküberzugsmittel aufgetragen und eingebrannt wird. Beispiele für Vorbeschichtungen auf Automobilkarossen oder deren Teilen sind eine Elektrotauchgrundierungsschicht, eine zweischichtige Vorbeschichtung bestehend aus einer Elektrotauchgrundierungsschicht und einer Spritzfüllerschicht oder eine zweischichtige Vorbeschichtung bestehend aus einer Elektrotauchgrundierungsschicht und einer zweiten elektrophoretisch aufgebrachten Überzugsschicht.

Die farb- und/oder effektgebende Basislackschicht kann vor Auftrag der Klarlackschicht aus dem erfindungsgemäßen Klarlacküberzugsmittel eingebrannt werden, bevorzugt jedoch wird das erfindungsgemäße Klarlacküberzugsmittel nach dem bekannten Naß-in-Naß-Verfahren auf die den Farbton der Mehrschichtlackierung bestimmende Basislackschicht aufgetragen. Dabei erfolgt der Auftrag der Basislackschicht durch Spritzen aus einem farb- und/oder effektgebenden wäßrigen oder lösemittelbasierenden Basislack in einer vom Farbton abhängigen Trockenschichtdicke, beispielsweise zwischen 10 bis 25 µm. Im Anschluß an die Applikation der Basislackschicht erfolgt nach einer kurzen Ablüftphase, z.B. bei 20 bis 80°C, der Auftrag der Klarlackschicht aus dem erfindungsgemäßen Klariacküberzugsmittel beispielsweise durch Spritzen beispielsweise in einer Trockenschichtdicke von im allgemeinen zwischen 25 und 50 µm. Gegebenfalls kann kurz abgelüftet werden. Danach wird das Substrat dem Einbrennprozeß zugeführt, bei dem die Klarlacküberzugsschicht gemeinsam mit der Basislackschicht bei erhöhten Temperaturen beispielsweise von 60 bis 160°C eingebrannt wird.

Mit der vorliegenden Erfindung lassen sich Mehrschichtlackierungen, insbesondere Basislack/Klarlack-Zweischichtlackierungen, insbesondere auf Kraftfahrzeugen und deren Teilen mit hervorragendem optisch-ästhetischem Eindruck und guter Chemikalien- und Säurefestigkeit herstellen. Ein Ablaufen des Klarlacks an senkrechten Flächen während des Aushärtens, insbesondere des Einbrennens wird wirksam verhindert.

### Beispiel 1 (Herstellung eines carboxylfunktionellen Polyesters):

### a) Herstellung eines hydroxyfunktionellen Polyesteroligomeren:

1100 g Trimethylolpropan und 899 g Adipinsäure werden in Gegenwart von 2 g hypophosphoriger Säure bei 180°C bis 240°C in der Schmelze auf eine Säurezahl von 0,5 mg KOH/g verestert. Anschließend wird mit 770 g Butylacetat verdünnt.

Das Produkt hat einen Einbrennrückstand von 64,5 % (1H. 150°C) und eine Hydroxylzahl von 390 mg KOH/g, bezogen auf Feststoffgehalt.

### b) Carboxylfunktionalisierung des hydroxyfunktionellen Polyesteroligomeren:

878 g des Produktes aus Beispiel 1a), 622 g Hexahydrophthalsäureanhydrid und 277 g Butylacetat werden auf 80°C erhitzt. Nach Abklingen der exothermen Reaktion wird auf 140°C erhitzt und die Reaktion bis zum Erreichen der erwünschten Säurezahl durchgeführt. Anschließend werden 100 g epsilon-Caprolacton zugegeben. Die Umsetzung wird bei 140°C bis zum Erreichen des theoretischen Festkörpergehaltes durchgeführt.

Das carboxylfunktionelle Polyesterharz hat einen Einbrennrückstand von 67,7 % (1h 150°C) und eine Säurezahl von 190 mg KOH/g, bezogen auf Feststoffgehalt.

### Beispiel 2 a - c (Herstellung von Klarlacken und Herstellung von Mehrschichtlackierungen

Es werden Klarlacke mit der in Tabelle 1 angegebenen Zusammensetzung hergestellt.

Auf mit einer Kataphoresegrundierung und Füllerschicht versehene Bleche wird jeweils ein schwarzer Basislack in einer Trockenschichtdicke von 16 µm aufgespritzt und 10 Minuten bei 80°C vorgetrocknet. Die Klarlacke 2 a - c werden jeweils keilförmig in 10 bis 60 µm Trockenschichtdicke auf die hängenden Bleche aufgespritzt. Nach 5 Minuten Ablüften bei Raumtemperatur wird 20 Minuten bei 140°C (Objekttemperatur) eingebrannt. Die Bleche befinden sich bei allen Operationen in der senkrechten Position.

Es werden jeweils hochglänzende Mehrschichtlackierungen erhalten. Alle Mehrschichtlackierungen zeigen im Tropfentest mit 10 %iger Schwefelsäure (20 min 60°C) keine sichtbare Filmveränderung (Quellung).

Tabelle 1 zeigt neben der Zusammensetzung der Klarlacke ihre jeweilige Ablaufgrenze.

**Tabelle 1**

| Bestandteile (Gew.-Teile): | 2a | 2b | 2c |
|---|---|---|---|
| Harzlösung aus Beispiel 1 | 202 | 167 | 187 |
| A¹⁾ | 489 | 408 | 458 |
| B²⁾ | - | 136 | 136 |
| Melaminharz³⁾ | 70 | 70 | - |
| Lichtschutzmittel⁴⁾ | 20 | 20 | 20 |
| Verlaufsmittel⁵⁾ | 5 | 5 | 5 |
| BenzyUiemiformal⁶⁾ | - | - | 10 |
| Methoxypropanol | 45 | 45 | 40 |
| Dipropylenglykoldimethylether | 25 | 20 | 20 |
| Butanol | 45 | 40 | 40 |
| Solvesso 100 | 99 | 89 | 84 |
| Klarlackablaufgrenze (µm) | 33 | 45 | 49 |

| | | | |
|---|---|---|---|
| 1) 69 gew.-%ige Lösung eines epoxidfunictionellen Methacrylcopolymeren (Monomerengewichtsverhältnis: 3 % tert.-Butylacrylat, 11 % Butandiolmonoacrylat, 17 % Styrol, 24 % Ethylhexylmethacrylat, 45 % Glycidylmethacrylat; zahlenmittleres Molekulargewicht (Mₙ) = 4000 in einem 9 : 1-Gemisch aus Solvesso 100 (Gemisch aromatischer Kohlenwasserstoffe mit Siedebereich 155 bis 185°C) und n-Butanol), | | | |
| 2) In der Lösung eines hydroxyfunktionellen Acrylatharzes (Hydroxylzahl 140 mg KOH/g) in einem 1,5 : 1-Gemisch von Solvesso 100 und Xylol hergestellte Suspension eines Diharnstoff-Derivats (Additionsprodukt von 2 mol Benzylamin an 1 mol Hexamethylendiisocyanat), Festkörper 60 Gew.-%, Gehalt an Diharnstoffderivat 4 Gew.-%, | | | |
| 3) 70 gew.-%ige Lösung eines butylierten Melaminharzes in n-Butanol, | | | |
| 4) 1 : 1-Gemisch eines Benztriazolderivats und eines sterisch gehinderten Amins (HALS-Typ), | | | |
| 5) Silikonöl, | | | |
| 6) Preventol D 2 von Bayer. | | | |

## Patentansprüche

1. Überzugsmittel, enthaltend Bindemittel und Vernetzer, ein oder mehrere organische Lösemittel, Antiablaufmittel, sowie gegebenenfalls Pigmente und/oder Füllstoffe und gegebenenfalls weitere lackübliche Additive, **dadurch gekennzeichnet, daß** als Bindemittel 20 bis 80 Gew.-% einer oder mehrerer carboxylfunktioneller Komponenten A) ausgewählt aus carboxylfunktionellen (Meth)acrylcopolymeren und/oder carboxyfunktionellen Polyestern, deren Carboxyfunktionalität jeweils einer Säurezahl von 15 bis 300 mg KOH/g entspricht und 20 bis 80 Gew.-% eines oder mehrerer epoxidfunktioneller Vernetzer B) enthalten sind, wobei sich die Gew.-% zu 100 Gew.-% addieren, wobei die Komponenten A) und B) zumindest teilweise präkondensiert sein können, sowie 5 bis 30 Gew.-% eines oder mehrerer Polymerpolyole C), ausgewählt aus hydroxylfunktionellen Polyestern, Polyurethanen und/oder (Meth)acrylcopolymeren, die von einer gegebenenfalls Hydroxylgruppen enthaltenden Komponenten A) und B) verschieden sind, bezogen auf die Summe der Gew.-% der Komponenten A) und B), und 0,1 bis 3 Gew.-%, bezogen auf den Harzfestkörper, einer oder mehrerer zuvor in Gegenwart zumindest eines Teils des oder der Polymerpolyole C) hergestellter oder dispergierter, im Überzugsmittel unlöslicher, fester Harnstoffverbindungen D) als Antiablaufmittel enthalten sind.

2. Überzugsmittel nach Anspruch 1, **dadurch gekennzeichnet, daß** es pigmentfrei als Klarlack formuliert ist.

3. Verfahren zur Herstellung von Mehrschichtlackierungen durch Auftrag einer Decklackschicht oder einer Basislack- und Klarlackschicht auf ein gegebenenfalls vorbehandeltes Substrat, **dadurch gekennzeichnet, daß** man die Decklackschicht oder die Klarlackschicht unter Verwendung eines Überzugsmittels nach Anspruch 1 oder 2 erstellt.

4. Verfahren nach Anspruch 3, **dadurch gekennzeichnet, daß** man die Decklackschicht oder Klarlackschicht in einer Trockenschichtdicke von 25 bis 60 µm erstellt.

5. Verwendung der Überzugsmittel nach Anspruch 1 oder 2 zur Mehrschichtlackierung.

6. Verwendung nach Anspruch 5 zur Herstellung von Mehrschichtlackierungen auf dem Kraftfahrzeugsektor.

## Claims

1. Coating composition containing binder and crosslinking agent, one or more organic solvents, sag control agents and optionally pigments and/or fillers and optionally further conventional lacquer additives, **characterised in that** as binders there are contained 20 to 80 % by weight of one or more carboxyfunctional components A) selected from carboxyfunctional (meth)acrylic copolymers and/or carboxyfunctional polyesters, of which the carboxyfunctionality corresponds to a respective acid value of 15 to 300 mg KOH/g, and 20 to 80 % by weight of one or more epoxyfunctional crosslinking agents B), the % by weight adding up to 100 % by weight, wherein components A) and B) can be at least partially precondensed, as well as 5 to 30 % by weight of one or more polymer polyols C) selected from hydroxyfunctional polyesters, polyurethanes and/or (meth)acrylic polymers which are different from components A) and B) optionally containing hydroxyl groups, based on the sum of the % by weight of components A) and B), and as sag control agent there are contained 0.1 to 3 % by weight, based on the solid resin content, of one or more solid urea compounds D) which have previously been produced or dispersed in the presence of at least a proportion of the polymer polyol(s) C) and are insoluble in the coating composition.

2. Coating composition according to claim 1, **characterised in that** it is formulated as an unpigmented clear lacquer.

3. Method of producing coatings consisting of several coats of lacquer by application of a top lacquer coat or a base lacquer and clear lacquer coat to an optionally pretreated substrate, **characterised in that** the top lacquer coat or the clear lacquer coat is produced using a coating composition according to claim 1 or 2.

4. Method according to claim 3, **characterised in that** the top lacquer coat or clear lacquer coat is produced in a dry layer thickness of 25 to 60 µm.

5. Use of the coating composition according to claim 1 or 2 for producing coatings consisting of several coats of lacquer.

6. Use according to claim 5 for producing automotive coatings consisting of several coats of lacquer.

## Revendications

1. Matière de revêtement contenant des liants et des réticulants, un ou plusieurs solvants organiques, des agents anti-coulure, ainsi que, le cas échéant, des pigments et/ou matières de charges et, le cas échéant, d'autres additifs courants de laques, **caractérisée en ce que** qu'elle contient, en tant que liant, de 20 à 80 % du poids d'un ou plusieurs composants A) carboxyle fonctionnels; sélectionnés parmi des copolymères (méth)acryliques et/ou des polyesters carboxy fonctionnels, dont la fonctionnalité carboxy correspond respectivement à un indice d'acidité de 15 à 300 mg KOH/g, et 20 à 80 % d'un ou plusieurs réticulants époxy fonctionnels, où les pourcentages de poids additionnés donnent 100 % du poids et où les composants A) et B) peuvent être au moins partiellement précondensés, ainsi que 5 à 30 % du poids d'un ou plusieurs polyols polymères C), sélectionnés parmi des polyesters hydroxyle fonctionnels, des polyuréthanes et/ou des copolymères (méth)acryliques différents par rapport à un composant A) et B) contenant, le cas échéant, des groupes hydroxyles, en fonction de la somme des % du poids des composants A) et B), et, comme agent antiaffaissement, 0,1 à 3 % du poids de matière non volatile de la résine d'une ou plusieurs combinaisons solides d'urée D), insolubles dans la matière de revêtement et fabriquées auparavant en présence d'au moins une partie du ou des polymères polyols C).

2. Matière de revêtement selon revendication 1, **caractérisée en ce qu'**elle est formulée comme une laque transparente exempte de pigments.

3. Procédé pour la fabrication de peintures multicouches par l'application d'une couche de laque de finition ou d'une couche de laque de base et une couche de laque transparente sur un substrat prétraité le cas échéant, **caractérisé en ce que** la couche de laque de finition ou la couche de laque transparente est réalisée par l'utilisation d'une matière de revêtement selon revendication 1 ou 2.

4. Procédé selon la revendication 3, **caractérisé en ce que** la couche de laque de finition ou la couche de laque transparente est réalisée dans une épaisseur de couche sèche de 25 à 60 µm.

5. Utilisation des matières de revêtement selon revendication 1 ou 2 dans la peinture multicouche.

6. Utilisation des matières de revêtement selon revendication 5 pour la fabrication de peintures multicouches dans le secteur automobile.
